# EUROPÄISCHE PATENTSCHRIFT

(11) **EP 2 561 248 B1**
(45) Veröffentlichungstag und Bekanntmachung des Hinweises auf die Patenterteilung: **14.05.2014**
(21) Anmeldenummer: 11715915.2
(22) Anmeldetag: 19.04.2011
(51) Int. Cl.: F16G 13/16, H02G 11/00

(54) **ENERGIEFÜHRUNGSKETTENANORDNUNG FÜR UMLAUFENDE VERBRAUCHER**
ENERGY CHAIN ASSEMBLY FOR REVOLVING LOADS
SYSTÈME DE CHAÎNE D'ACHEMINEMENT D'ÉNERGIE POUR CONSOMMATEURS EN CIRCULATION

(30) Priorität: 19.04.2010 DE 202010005842 U
(43) Veröffentlichungstag der Anmeldung: 27.02.2013
(73) Patentinhaber: Igus GmbH, 51127 Köln (DE)
(72) Erfinder: STRACK, Stefan, 53639 Königswinter (DE); HERMEY, Andreas, 53773 Hennef (DE)
(74) Vertreter: Lippert, Stachow & Partner
(86) Internationale Anmeldenummer: PCT/EP2011/056225
(87) Internationale Veröffentlichungsnummer: WO 2011/131662

(56) Entgegenhaltungen:
- DE-A1- 10 252 702
- DE-A1- 10 301 205
- US-A1- 2006 042 175

## Beschreibung

Die vorliegende Erfindung betrifft eine Energieführungskettenanordnung für umlaufende Verbraucher.

Energieführungsketten dienen der Zuführung gasförmiger, flüssiger Medien und/oder elektrischen Leitungen von einer festen Quelle dafür zu einem bewegten Verbraucher. Die Energieführungskette besteht aus gegeneinander schwenkbar verbundenen Kettengliedern, die gemeinsam einen Kanal bilden, in dem die entsprechenden Leitungen geführt sind. Im Falle, dass der Verbraucher sich changierend bewegt, bildet die Energieführungskette einen Untertrum, einen Obertrum und einen Umlenkbereich, wobei der Obertrum der Bewegung des Verbrauchers folgt und der Umlenkbereich sich mit halber Geschwindigkeit des Obertrums bewegt. Der minimale Radius des Umlenkbereiches durch sprechende Anschläge an den Kettengliedern, die die gegenseitige Verschwenkbarkeit benachbarter Kettenglieder begrenzen, konstruktiv festgelegt.

Herkömmliche Energieführungsketten können umlaufende Bewegungen, zum Beispiel folgend einem umlaufenden Transportband, auf dem Verbraucher montiert sind, nicht folgen, da sich die in der Energieführungskette geführten Leitungen an der Einleitstelle in die Kette verdrillen würden.

Gemäß DE 103 01 205 B4 wurde hierzu bereits vorgeschlagen, eine Drehdurchführung für medienführende und elektrische Leitungen vorzusehen, das feste Ende der Energieführungskette innerhalb des Umlaufs anzuordnen, wobei sich das umlaufende Ende der Energieführungskette um das drehbar befestigte feste Ende herum bewegt und eine Verdrillung der Leitungen durch die Drehdurchführung verhindert wird.

Der Vorschlag gemäß DE 103 01 205 B4 ist begrenzt auf Umläufe, deren lineare Ausdehnung durch die selbsttragende Länge des Obertrums begrenzt sind.

Aufgabe der vorliegenden Erfindung ist es, eine Energieführungskettenanordnung zu schaffen, die eine stabilere Führung der Kette erlaubt und deren Umlauflänge nicht durch die selbsttragende Länge der Energieführungskette begrenzt ist, d. h. bei der Unterstützungselemente für das Obertrum vorgesehen sind, auf denen das Obertrum gleitet und die den Umlauf nicht behindern.

Dies gelingt erfindungsgemäß dadurch, das das feste Ende der Energieführungskette unterschiedliche Positionen einnehmen kann, nämlich eine erste Position unterhalb des Unterstützungselementes und eine zweite Position oberhalb des Unterstützungselementes und dass das Unterstützungselement linear verschiebbar ist, wobei der Positionswechsel des festen Endes der Kette jeweils erfolgt, wenn ein Ende des Unterstützungselementes sich oberhalb oder unterhalb des festen Endes befindet.

Gegenstand der vorliegenden Erfindung ist demgemäß eine Energieführungskettenanordnung für umlaufende Verbraucher, die
eine Energieführungskette mit
einem ersten Ende,
das mit dem mindestens einen umlaufenden Verbraucher synchron mitläuft, und
einem zweiten, nicht mitlaufenden Ende,
in das elektrische und/oder gasförmige und/oder flüssige Medien führende Leitungen
über eine Drehdurchführung eingeleitet werden, aufweist, wobei
die Drehdurchführung auf einer Achse innerhalb quer zu der Umlaufbahn der Energieführungskette angeordnet ist, und
die Energieführungskette einen nicht stationären Umlenkbereich zwischen einem Obertrum und einem Untertrum aufweist,
dadurch gekennzeichnet, dass
das Obertrum auf einem Support unterstützt wird,
wobei der Support mit dem mitlaufenden Ende der Energieführungskette mit halber Geschwindigkeit mitläuft, so dass dieser eine changierende Linearbewegung ausführt,
und das nicht mitlaufende Ende der Energieführungskette bei Annäherung des Umlenkbereichs an die Drehdurchführung eine Schwenkbewegung aus einer Position unterhalb der Drehdurchführung in eine Position auf dem Niveau des Obertrums durchführt.

Der Support hat zweckmäßigerweise eine Ausdehnung in Bewegungsrichtung, die dem halben Abstand der Mittelpunkte der Radien der beiden am weitesten voneinander entfernt bildbaren Umlenkbereiche der Energieführungskette entspricht. Die Drehdurchführung wird vorzugsweise in der Mitte zwischen den beiden extremen Positionen der Umlenkbereiche angeordnet.

Vorzugsweise wird der Support in einer seitlichen, zur Ebene der Umlaufbahn offenen Führungsrinne geführt, besonders bevorzugt in einer T-Nut. Im Falle von Energieführungsketten mit größerer Querausdehnung kann der Support auch beidseitig in Führungsrinnen geführt sein.

Der Support kann ferner eine zum Obertrum offenen Rinne aufweisen, in der das Obertrum seitlich geführt wird. Ferner kann das Obertrum eine Vielzahl von nebeneinander in dessen Längsrichtung angeordnete Rollen aufweisen, auf denen das Obertrum abrollt.

Weiter bevorzugt sind die Enden des Supports im Auflagebereich für die Energieführungskette an den Radius des Umlenkbereichs angepasst mit abgerundeter Unterkante im Einleitbereich des beweglichen Endes der Energieführungskette.

Der Vortrieb des Supports kann durch Mitnahme durch den am Ende des Supports anliegenden Teil des Umlenkbereichs der Energieführungskette erfolgen. Ein aus dem Antrieb des Umlaufenden Verbrauchs abgeleiteter entsprechend durch Getriebe übersetzter Antrieb ist ebenfalls denkbar.

Das mitlaufende Ende der Energieführungskette ist vorzugsweise über einen Mitnehmer mit dem umlaufenden Verbraucher bzw. mit dem umlaufenden Transportband, auf dem der Verbraucher angeordnet ist, verbunden. Der Mitnehmer kann einen parallel zur Ebene des Umlauf wirksamen Entfernungsausgleich zwischen Transportband und Energieführungskette aufweisen. Insoweit ist es tolerierbar, dass die Umläufe des Transportbandes, auf dem der Verbraucher angeordnet ist, und der Energieführungskette in gewissem Umfang ungleich sind.

Vorzugsweise werden die Versorgungsleitungen, die aus dem mitlaufenden Ende der Energieführungskette herausgeführt werden, über den Mitnehmer zu dem umlaufenden Transportband, das den oder die mehreren Verbraucher trägt, geführt und dort an Verteilungsleitungen für die Mehrzahl Verbraucher, die an dem umlaufenden Transportband angeordnet sind, angeschlossen.

Die Achse für die Schwenkbewegung des nicht mitlaufenden Endes der Energieführungskette fällt vorzugsweise mit der Achse der Drehdurchführung zusammen.

Die Energieführungskette sollte eine Länge aufweisen, die der halben Länge des linearen Verfahrweges des Umlaufs zuzüglich der Länge des Umlenkbereichs aufweist, sollte aber auch nicht wesentlich länger sein.

Die Verschwenkung des nicht mitlaufenden Endes der Energieführungskette kann in einfacher Weise durch den Zug der Kette selbst erfolgen, wenn der Umlenkbereich das nicht mitlaufende Ende erreicht hat.

Andererseits können Mittel vorgesehen sein zur Erkennung der Annäherung des Umlenkbereichs der Energieführungskette an die Drehdurchführung, und Mittel zur Einleitung der Schwenkbewegung des nicht mitlaufenden Teils der Energieführungskette. Die Mittel zur Erkennung der Annäherung des Umlenkbereiches können an den Endbereichen des Supports angeordnet sein.

Weiter bevorzugt können Mittel zur Blockierung der Drehdurchführung gegen Drehung, und Mittel zur Aufhebung der Blockierung bei Erkennung der Annäherung des Umlenkbereichs an die Drehdurchführung für die Dauer der Schwenkbewegung vorgesehen sein.

Das Untertrum wird vorzugsweise in einer zum Obertrum hin offenen Führungsrinne geführt.

Der Abstand von Untertrum und Obertrum entspricht vorzugsweise dem Durchmesser des Umlenkbereichs.

Die Drehdurchführung weist in an sich bekannter Weise einen oder mehrere zur Achse der Drehdurchführung konzentrische Leitungen für Gase und/oder Flüssigkeiten mit entsprechenden Gleitdichtungen und/oder Schleifringübertragungselemente für elektrische Leitungen auf.

Die Führungsrinnen für das Obertrum und das Untertrum und die Drehdurchführung sowie weitere Elemente der erfindungsgemäßen Anordnung können an einer gemeinsamen Unterstützungsvorrichtung vormontiert sein, so dass diese ohne lange Betriebsausfallzeiten auf einfache Weise neben einer Anlage mit umlaufenden Verbrauchern montiert werden kann.

Zusätzlich oder alternativ zu dem vorstehend beschriebenen Support kann mindestens ein Support für das zwischen den Umlenkbereichen und dem benachbarten Support bzw. zwischen den mehreren Supporten freitragende Obertrum vorgesehen sein, wobei der mindestens eine Support bei Annäherung des Umlenkbereiches an diesen wegschwenkbar oder zurückziehbar ist, so dass der Umlenkbereich an dem Support vorbeigeführt werden kann.

Nach einer ersten Ausführungsform ist dieser mindesten eine Support federbelastet unter der Schubwirkung des Umlenkbereiches in beiden Bewegungsrichtungen des Obertrums wegschwenkbar.

Dabei sind vorzugsweise für das Obertrum seitliche Führungsleisten vorgesehen sind, durch die dieses zumindest im Bereich des mindesten einen Supportes seitlich geführt ist.

Nach einer zweiten Ausführungsform weist der mindestens eine Support seitliche Führungselemente für das Obertrum und in Bewegungsrichtung des Obertrums sich ersteckende seitliche Fühler auf, die in Kontakt mit dem Umlenkbereich der Energieführungskette, eine federbelastete Schwenkbewegung des Supports nach unten entrasten.

Es kann auch vorgesehen sein, dass eine Vielzahl derartiger wegschwenkbarer Supporte vorgesehen sind, so dass die freitragenden Abschnitte des Obertrums sehr kurz sind. Im Extremfall können die Supporte einen Abstand aufweisen, die der Länge eines Kettengliedes entspricht.

Die Erfindung wird nachfolgend anhand der beigefügten Figuren näher erläutert. Gleiche Bezugszeichen in verschiedenen Figuren bezeichnen funktional gleiche Elemente.
Fig. 1 zeigt eine perspektivische Ansicht einer Ausführungsform der erfindungsgemäßen Anordnung;
Fig. 2 zeigt eine Seitenansicht der Anordnung gemäß Fig. 1 in einer ersten Position des nicht mitlaufenden Endes der Energieführungskette;
Fig. 3 zeigt eine Seitenansicht gemäß Fig. 2 in der zweiten Position des nicht mitlaufenden Endes der Energieführungskette;
Fig. 4 zeigt einen Schnitt B-B aus Fig. 2 durch die erfindungsgemäße Anordnung.

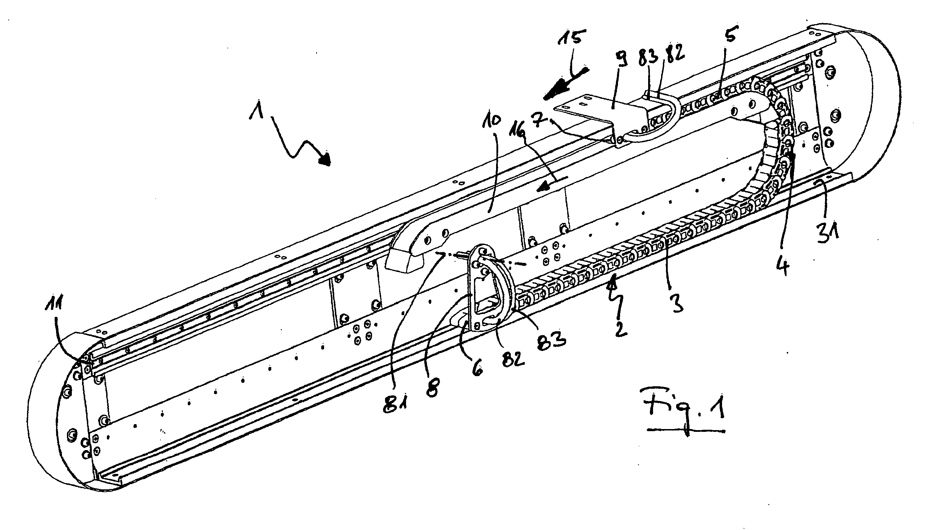

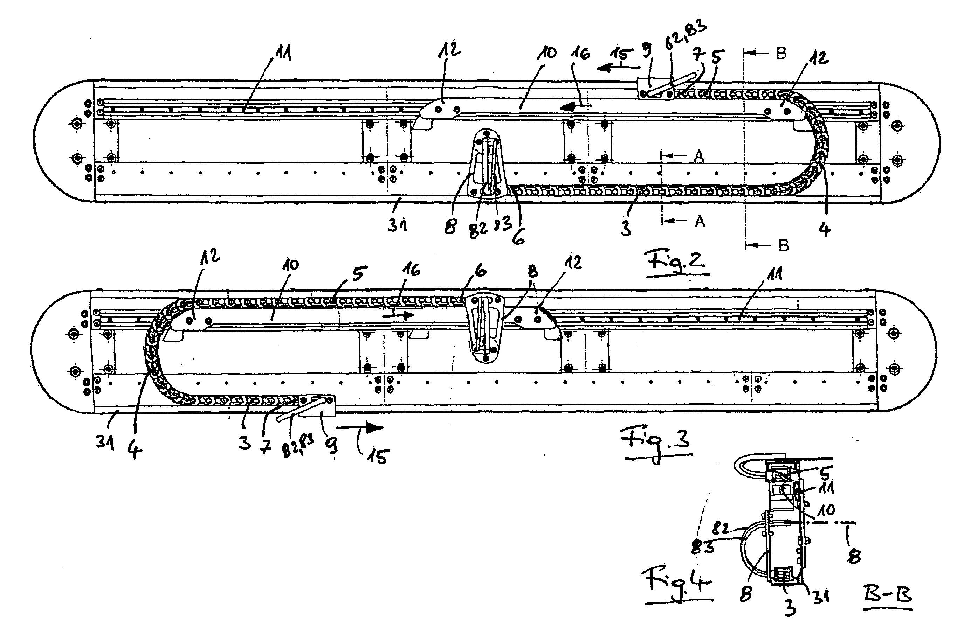

Die Anordnung 1 umfasst eine Energieführungskette 2 mit dem in einer unteren Führungsrinne 31 geführten Untertrum 3, dem Umlenkbereich 4, dem Obertrum 5, dem nicht mitlaufenden Ende 6 und dem mitlaufenden Ende 7. Das nicht mitlaufende Ende 6 ist mit einem Schwenkarm 8 verbunden, dessen Schwenkachse mit 81 bezeichnet ist. Koaxial mit der Achse des Schwenkarms 81 ist die Drehdurchführung (nicht dargestellt)mit diesem verbunden. Aus der Drehdurchführung treten die Versorgungsleitungen 82, 83 aus und werden am nicht mitlaufenden Ende der Energieführungskette in diese eingeleitet. Das mitlaufende Ende der Energieführungskette 7 ist mit einem Mitnehmer 9 verbunden, der das mitlaufende Ende mit dem umlaufenden Verbraucher verbindet (nicht dargestellt). An dem mitlaufenden Ende werden die Versorgungsleitungen 81, 82 aus der Kette herausgeführt und mit entsprechenden Leitungen des umlaufenden Verbrauchers verbunden (nicht dargestellt). Das Obertrum 5 gleitet auf dem Support 10, der wiederum mit halber Geschwindigkeit des mitlaufenden Endes der Energieführungskette in einer seitlichen Führungsrinne 11 gleitet. Die Endbereiche 12 des Supports 10 sind an den Radius des Umlenkbereiches 4 der Kette angepasst, um ein leichtes Aufgleiten der Kette aus dem Umlenkbereich zu ermöglichen. Wie aus Fig. 1 ersichtlich, ist der Auflagebereich des Supports 10 in Form einer zum Obertrum 5 hin offenen Rinne ausgebildet, in der das Obertrum geführt ist. Der Pfeil 15 gibt die Bewegungsrichtung des mitlaufenden Endes 7 der Energieführungskette und der Pfeil 16 die Bewegungsrichtung des Supports 10 an, dabei wird der Support von dem jeweils aufgleitenden (Fig. 2) bzw. abgleitenden (Fig. 3) Teil des Umlenkbereiches 4 mitgenommen. Der dem nicht mitlaufenden Ende 7 benachbarte Teil der Kette bildet also im Laufe eines Umlaufs einmal das Untertrum (Fig. 2) und einmal das Obertrum (Fig. 3).

## Patentansprüche

1. Energieführungskettenanordnung (1) für umlaufende Verbraucher enthaltend
eine Energieführungskette (2) mit einem ersten Ende (7),
das mit dem mindestens einen umlaufenden Verbraucher synchron mitläuft, und
einem zweiten, nicht mitlaufenden Ende (6),
in das elektrische und/oder gasförmige und/oder flüssige Medien führende Leitungen (82, 83) über eine Drehdurchführung eingeleitet werden, wobei die Drehdurchführung auf einer Achse innerhalb der Umlaufbahn der Energieführungskette (2) und quer dazu angeordnet ist,
die Energieführungskette einen nicht stationären Umlenkbereich (4) zwischen einem Obertrum (5) und einem Untertrum (3) aufweist
und das nicht mitlaufende Ende (6) der Energieführungskette (2) bei Annäherung des Umlenkbereichs (4) an die Drehdurchführung eine Schwenkbewegung durchführt,
**dadurch gekennzeichnet, dass**
das Obertrum (5) auf einem Support (10) unterstützt wird,
wobei der Support(10) mit dem mitlaufenden Ende (7)der Energieführungskette (2) mit halber Geschwindigkeit mitläuft,
so dass dieses eine changierende Linearbewegung ausführt, und die Schwenkbewegung des nicht mitlaufenden Endes (6) aus einer Position unterhalb der Drehdurchführung in eine Position auf dem Niveau des Obertrums (5) erfolgt.

2. Anordnung (1) nach Anspruch 1, wobei Mittel vorgesehen sind zur Erkennung der Annäherung des Umlenkbereichs der Energieführungskette (2) an die Drehdurchführung, und
zur Einleitung der Schwenkbewegung des nicht mitlaufenden Teils (6) der Energieführungskette (2).

3. Anordnung (1) nach Anspruch 2, wobei die Mittel zur Erkennung an den Endbereichen (12) des Supports (10) in Bezug auf dessen Bewegungsrichtung (16) angeordnet sind.

4. Anordnung (1) nach einem der vorhergehenden Ansprüche, wobei der Support (10) an mindestens einer Seite in einer seitlichen, zur Ebene der Umlaufbahn offenen Führungsrinne (11) geführt ist.

5. Anordnung (1) nach Anspruch 2 oder 3, wobei Mittel zur Blockierung der Drehdurchführung gegen Drehung, und Mittel zur Aufhebung der Blockierung bei Erkennung der Annäherung für die Dauer der Schwenkbewegung vorgesehen sind.

6. Anordnung (1) nach einem der vorhergehenden Ansprüche, wobei das Untertrum (3) in einer zum Obertrum (5) hin offenen Führungsrinne (31) geführt ist.

7. Anordnung (1) nach einem der vorhergehenden Ansprüche, wobei der Support (10) für das Obertrum (5) eine auf der vom Untertrum abgewandten Seite offene Führungsrinne aufweist.

8. Anordnung (1) nach einem der vorhergehenden Ansprüche, wobei das umlaufende Ende (7) über einen Mitnehmer (9) mit dem umlaufenden Verbraucher synchronisiert ist.

9. Anordnung (1) nach einem der vorhergehenden Ansprüche, wobei die Energieführungskette (2) eine Länge hat, die der Länge eines linearen Teils des Umlaufs des umlaufenden Verbrauchers plus der Länge des Umlenkbereichs (4) entspricht.

## Claims

1. Energy guiding chain arrangement (1) for revolving consumers, comprising
an energy guiding chain (2) with a first end (7) that moves in synchrony with the at least one revolving consumer, and
a second, non-moving end (6),
into which lines (82, 83) carrying electricity and/or gaseous and/or liquid media are introduced via a rotary connection, where the rotary connection is located on an axis within the circulatory path of the energy guiding chain (2) and transverse to it,
the energy guiding chain displays a non-stationary deflection zone (4) between an upper strand (5) and a lower strand (3)
and the non-moving end (6) of the energy guiding chain (2) performs a pivoting movement when the deflection zone (4) approaches the rotary connection,
**characterised in that**
the upper strand (5) rests on a support (10),
where the support (10) moves with the moving end (7) of the energy guiding chain (2) at half the speed,
such that the latter performs a changing linear movement, and the pivoting movement of the non-moving end (6) takes place from a position below the rotary connection to a position at the level of the upper strand (5).

2. Arrangement (1) according to Claim 1, where means are provided for detecting the approach of the deflection zone of the energy guiding chain (2) to the rotary connection, and
for initiating the pivoting movement of the non-moving part (6) of the energy guiding chain (2).

3. Arrangement (1) according to Claim 2, where the means for detection are located on the end areas (12) of the support (10) in relation to its direction of movement (16).

4. Arrangement (1) according to one of the preceding Claims, where the support (10) is guided, on at least one side, in a lateral guide channel (11) that is open towards the plane of the circulatory path.

5. Arrangement (1) according to Claim 2 or 3, where means are provided for blocking rotation of the rotary connection, and means for cancelling the blocking for the duration of the pivoting movement when approach is detected.

6. Arrangement (1) according to one of the preceding Claims, where the lower strand (3) is guided in a guide channel (31) that is open towards the upper strand (5).

7. Arrangement (1) according to one of the preceding Claims, where the support (10) displays a guide channel for the upper strand (5) that is open on the side facing away from the lower strand.

8. Arrangement (1) according to one of the preceding Claims, where the revolving end (7) is synchronised with the revolving consumer via a driver (9)

9. Arrangement (1) according to one of the preceding Claims, where the energy guiding chain (2) has a length corresponding to the length of one linear section of the circulatory path of the revolving consumer plus the length of the deflection zone (4).

## Revendications

1. Système de chaîne d'acheminement d'énergie (1) pour consommateurs en circulation, comportant une chaîne d'acheminement d'énergie (2) comprenant une première extrémité (7) qui est déplacée de manière synchrone avec un consommateur en circulation, et une deuxième extrémité (6) non-déplacée dans laquelle sont introduites des lignes (82, 83) aménageant des milieux électriques et/ou gazeux et/ou fluides par l'intermédiaire d'un passage tournant, passage tournant qui est arrangé sur an axe à l'intérieur d'une trajectoire de la chaîne d'acheminement d'énergie (2) est transversalement par rapport de celui-ci, la chaîne d'acheminement d'énergie comprenant une région de déviation (4) non-stationnaire entre un brin supérieur (5) et un brin inférieur (3), et l'extrémité non-déplacée (6) de la chaîne d'acheminement d'énergie (2) effectuant un mouvement de pivotement lors de l'approche de la région de déviation (4),
***caractérisé* en ce que** le brin supérieur (5) est soutenu par un chariot (10) qui se déplace avec l'extrémité déplacée (7) à demi vitesse de sorte que celle-ci effectue un mouvement linéaire changeant, et le mouvement de pivotement de l'extrémité non-déplacée (6) s'effectue d'une position sous le passage tournant dans une position au niveau de brin supérieur (5).

2. Système (1) selon la revendication 1, comprenant des moyens prévus pour détecter lorsque la région de déviation (4) de la chaîne d'acheminement d'énergie approche le passage tournant et pour lancer le mouvement de pivotement de la partie non-déplacée (6) de la chaîne d'acheminement d'énergie (2).

3. Système (1) selon la revendication 2, dans lequel lesdits moyens de détection sont disposés sur les parties d'extrémité (12) du chariot (10) par rapport à sa direction de mouvement (16).

4. Système (1) selon l'une des revendications précédentes, dans lequel le chariot (10) est guidé au moins d'un côté dans une gorge de guidage (11) latérale ouverte par rapport au plan de la trajectoire.

5. Système (1) selon les revendications 2 ou 3, comprenant des moyens prévus pour bloquer le passage tournant contre le mouvement tournant, et des moyens pour supprimer le blocage lors de la détection de l'approche pour la durée de mouvement de pivotement.

6. Système (1) selon l'une des revendications précédentes, dans lequel le brin inférieur (3) est guidé dans une gorge de guidage (31) ouverte vers le brin supérieur (5).

7. Système (1) selon l'une des revendications précédentes, dans lequel le chariot (10) pour le brin supérieur (5) comporte une gorge de guidage ouverte sur le côté détourné du brin inférieur.

8. Système (1) selon l'une des revendications précédentes, dans lequel l'extrémité en circulation (7) est synchronisée avec le consommateur en circulation par l'intermédiaire d'un entraîneur (9).

9. Système (1) selon l'une des revendications précédentes, dans lequel la chaîne d'acheminement d'énergie a une longueur qui correspond à la longueur d'une partie linéaire de la circulation du consommateur en circulation plus la longueur de la région de déviation (4).
